# EUROPEAN PATENT APPLICATION

(11) **EP 3 360 748 A1**
(43) Date of publication of application: **15.08.2018**
(21) Application number: 18156632.4
(22) Date of filing: 14.02.2018
(51) Int. Cl.: B60W 40/068, B60W 50/14, B60W 40/06

(54) **DRIVING ASSISTANCE OF COLLABORATIVE TYPE**

(30) Priority: 14.02.2017 IT 201700016359
(71) Applicant: Soluzioni Ingegneria S.r.l., 23887 Olgiate Molgora (LC) (IT)
(72) Inventor: LEO, Elisabetta, 23802 Carenno (LC) (IT); PEZZOLA, Marco Ezio, 23873 Missaglia (LC) (IT)
(74) Representative: Pezzoli, Ennio

(57) **Abstract**

A solution of driving assistance of a vehicle is proposed. A corresponding method (400) comprises, in a mobile computing device (110) of a person on board the vehicle, monitoring (402-410) a current position and a current acceleration of the mobile computing device over time, transmitting (416) an indication of the current position and of an estimation parameter depending on the current acceleration to a central processing system for causing the central processing system to estimate corresponding road frictions in a plurality of road areas according to the current positions and the estimation parameters received from a plurality of instances of the mobile computing device, estimating (412-414) an expected route of the vehicle according to the current positions being monitored over time, receiving (426) one or more expected road frictions comprising the road frictions of corresponding expected road areas of said road areas along the expected route, verifying (428-440) an expected danger condition according to the expected road frictions, and emitting (442-444) a danger signal in response to the expected danger condition.

## Description

### Technical field

The present invention relates to the data processing field. More specifically, this invention relates to driving assistance of a vehicle.

### Background art

The background of the present invention is hereinafter introduced with the discussion of techniques relating to its context. However, even when this discussion refers to documents, acts, artifacts and the like, it does not suggest or represent that the discussed techniques are part of the prior art or are common general knowledge in the field relevant to the present invention.

The driving assistance (or aid) of vehicles is a rapidly developing field. In this respect, several driving assistance systems have been proposed to facilitate the driving of vehicles, and especially to make it safer.

Particularly, several vehicles are equipped with driving assistance systems to signal danger conditions (for example, by warning lights, audio alarms, vibration of the steering wheel); typical examples are systems that measure the outside temperature to determine the possible presence of ice, monitor biometric parameters of a driver to determine its reactivity, read road signs to determine the exceeding of speed limits, detect holes present in the road.

More sophisticated driving assistance systems are also available for intervening automatically on the vehicles to avoid the possible consequences of the danger conditions; for example, anti-collision systems brake the vehicles when a potential obstacle is too close, anti-lock systems decrease the braking when the wheels lock, anti-slide systems reduce the power delivered by the engine when the wheels slide, stability control systems regulate the braking and the engine power to correct skidding.

However, all of the driving assistance systems mentioned above intervene only once the danger condition has already occurred.

Some vehicle manufacturers have also proposed techniques based on communication among their vehicles. For example, some models of vehicles of a same manufacturer may be equipped with sensors to detect specific road conditions (for example, presence of ice, holes); moreover, these vehicles are equipped with a navigation system that detects their position for this purpose. The vehicles transmit information relating to the road conditions and to their position to a central processing system of the manufacturer (for example, via a mobile telephone network). The central processing system aggregates the information received from the various vehicles to determine possible danger conditions in specific danger areas. For every danger condition, the processing system sends an alert to any vehicles of the same manufacturer that are approaching each danger area; such vehicles signal the danger condition to their drivers, so as to allow them to react accordingly (for example, by slowing down the speed of travel). In addition, the processing system sends an alert to the competent authorities as well; in this way, the competent authorities may intervene promptly in the danger areas (for example, by installing danger signs or performing maintenance activities).

However, such driving assistance systems are only limited to vehicles of the same manufacturer, so that they are not of general use.

In any case, the driving assistance systems are all vehicle-centric.

Particularly, the driving assistance systems require the installation of various sensors on the vehicles (to measure corresponding parameters of the vehicles); these sensors are relatively expensive, thereby increasing the total cost of the entire driving assistance systems. Moreover, the sensors are typically embedded in corresponding parts of the vehicles (for example, bodywork, wheels) to provide high levels of accuracy; as a consequence, possible maintenance operations are relatively complex (and then they too are expensive).

The driving assistance systems are substantially always pre-installed on the vehicles; moreover, the most sophisticated driving assistance systems are typically available only on high-end vehicles. Therefore, many vehicles are equipped only with basic driving assistance systems or they are completely lacking them (especially in the case of relatively old vehicles). In any case, the driving assistance systems remain frozen to the production date of the vehicles; therefore, the existing vehicles do not benefit from their technological developments.

The above limits the spread of the driving assistance systems on a large scale. All of this has a negative effect on the safety of the vehicles and then on the risk of road accidents.

### Summary

A simplified summary of the present invention is herein presented in order to provide a basic understanding thereof; however, the sole purpose of this summary is to introduce some concepts of the disclosure in a simplified form as a prelude to its following more detailed description, and it is not to be interpreted as an identification of its key elements nor as a delineation of its scope.

In general terms, the present invention is based on the idea of provide a driving assistance of collaborative type.

Particularly, an aspect provides a driving assistance method of a vehicle, wherein a danger condition is estimated by a mobile computing device (of a person on board the vehicle) according to one or more expected road frictions (for an expected road route of the vehicle), which are estimated by a central processing system according to a current position and an estimation parameter depending on a current acceleration that are monitored over time by a plurality of instances of the mobile computing device.

A further aspect provides a driving assistance method of a plurality of vehicles, wherein a central processing system estimates corresponding road frictions in a plurality of road areas according to current positions and estimation parameters depending on current accelerations that are received from a plurality of mobile computing devices (of corresponding persons on board the vehicles) and it transmits one or more expected road frictions to each of the mobile computing devices (for an expected road route of the vehicle).

A further aspect provides a software program for implementing each of these methods.

A further aspect provides a corresponding software program product.

A further aspect provides a corresponding mobile computing device.

A further aspect provides a corresponding central processing system.

More specifically, one or more aspects of the present invention are set out in the independent claims and advantageous features thereof are set out in the dependent claims, with the wording of all the claims that is herein incorporated *verbatim* by reference (with any advantageous feature provided with reference to any specific aspect that applies *mutatis mutandis* to every other aspect).

### Brief description of the drawings

The solution of the present invention, as well as further features and the advantages thereof, will be best understood with reference to the following detailed description thereof, given purely by way of a non-restrictive indication, to be read in conjunction with the accompanying drawings (wherein, for the sake of simplicity, corresponding elements are denoted with equal or similar references and their explanation is not repeated, and the name of each entity is generally used to denote both its type and its attributes, like value, content and representation). In this respect, it is expressly intended that the drawings are not necessary drawn to scale (with some details that may be exaggerated and/or simplified) and that, unless otherwise indicated, they are merely used to illustrate the structures and procedures described herein conceptually. Particularly:
FIG.1A-FIG.1D show the general principles of the solution according to an embodiment of the present invention,
FIG.2 shows a block diagram of a system that may be used to implement the solution according to an embodiment of the present invention,
FIG.3 shows the main software components that may be used to implement the solution according to an embodiment of the present invention, and
FIG.4A-FIG.4B show an activity diagram describing the flow of activities relating to an implementation of the solution according to an embodiment of the present invention.

### Detailed description

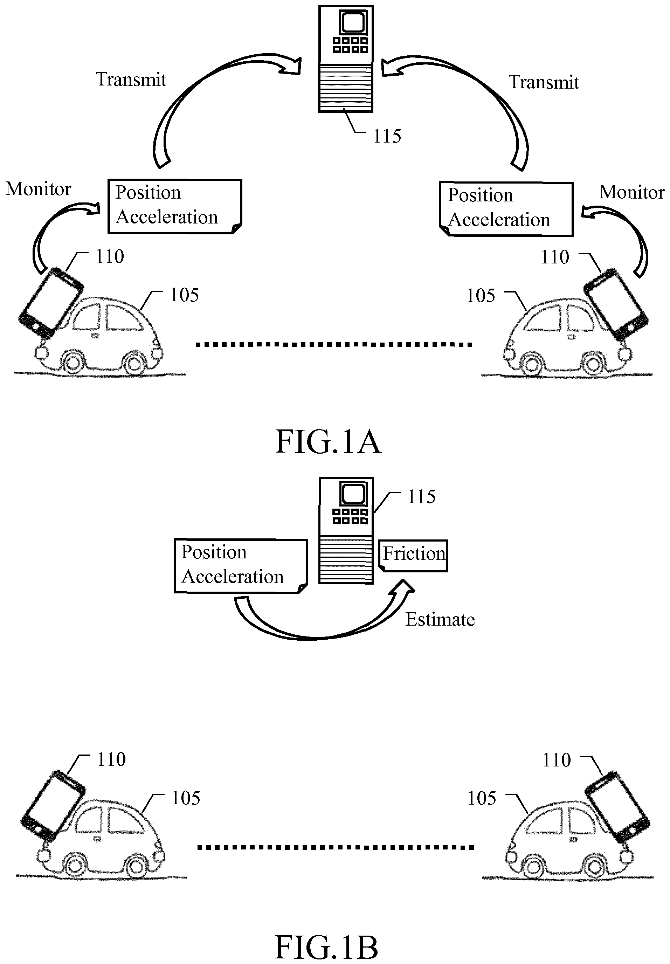

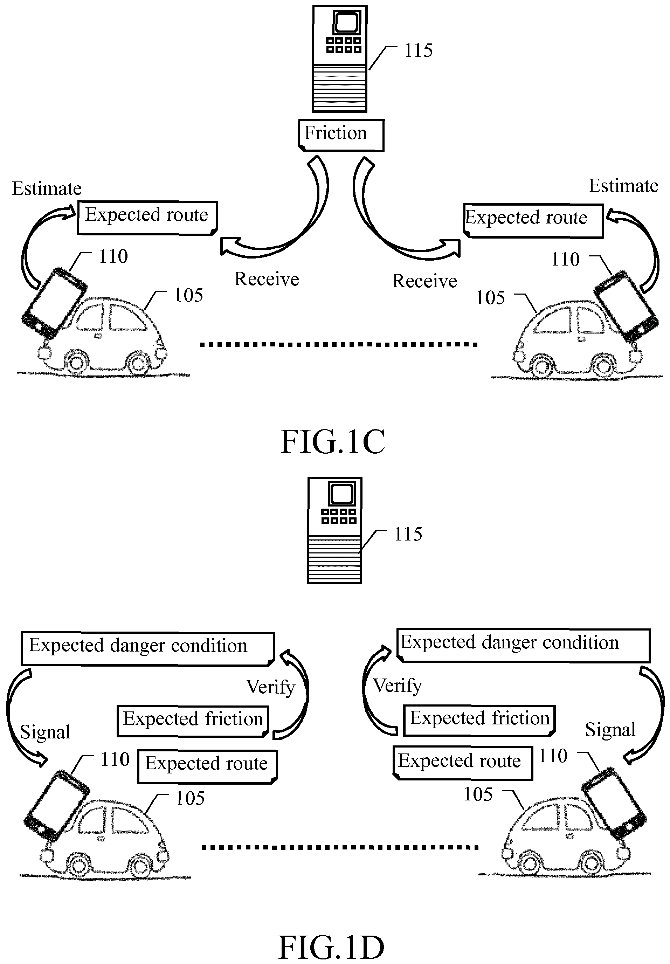

With reference in particular to FIG.1A-FIG.1D, the general principles are shown of the solution according to an embodiment of the present invention.

Starting from FIG.1A, a plurality of vehicles 105 (for example, cars) are circulating. One or more persons on board each vehicle has a mobile computing device, for example, a smartphone 110 with her/him. Each smartphone 110 monitors over time the current value of its position, or current position, and the current value of its acceleration, or current acceleration (for example, defined by the coordinates detected by a satellite receiver and by the horizontal acceleration detected by an accelerometer, respectively); the smartphone 110 then transmits an indication of the current position and of an estimation parameter depending on the current acceleration (for example, a corresponding engaged friction) to a central processing system, such as a server 115 (for example, in the Internet).

Moving to FIG.1B, the server 115 receives the current positions and the current accelerations that are monitored over time from the various smartphones 110. The server 115 aggregates the engaged frictions for road zones based on the corresponding current positions (for example, each of some hundreds of square meters); for each road area, the server 115 estimates a corresponding road friction according to the engaged frictions of the road area (for example, equal to a percentage of its maximum possible value).

Moving to FIG.1C, each smartphone 110 estimates an expected route of the corresponding vehicle 105; the expected route is estimated according to the current positions that have been monitored over time (for example, identifying an advancing direction in a road map stored in the smartphone 110). Each smartphone 110 then receives one or more expected road frictions from the server 115. The expected road frictions comprise the road frictions of corresponding (expected) road areas along the expected route; therefore, the road frictions represent an estimate of the road condition that the vehicle 105 is likely to encounter shortly.

Moving to FIG.ID, each smartphone 110 verifies an expected danger condition. The expected danger condition is verified according to the expected road frictions (for example, by verifying whether a current value of the speed, or current speed, of the smartphone 110, calculated on the basis of its current positions monitored over time, allows the corresponding vehicle 105 to halt at a stop sign or to go through a turn); therefore, the expected danger condition represents a likely future risk for the vehicle 105, assuming that it continues along the expected route. In case the danger condition is determined, the smartphone 110 emits a corresponding danger signal (for example, via an audio alert).

The above-described solution is proactive; indeed, it allows intervening in advance, before the danger conditions occur and then preventing the corresponding risk of road accidents.

This solution is of general use; indeed, it may be used in any vehicle on which there is a person with a smartphone.

The solution is very cost effective, because it simply leverages the smartphone without requiring any dedicated sensor on the vehicles. Nevertheless, the collaborative approach (wherein all the persons who are on board the various vehicles contribute to the final result) allows maintaining high levels of reliability; indeed, the high number of measurements collected in various conditions (by all the smartphones of the persons on board the vehicles) allows compensating for their lower accuracy (compared to the measurements that might be performed by dedicated sensors on board the vehicles).

As a result, the proposed solution may be used on any vehicles (regardless of their range); moreover, it may be maintained constantly up-to-date on the smartphones (for example, to exploit new technological developments).

All of the above promotes the spread of the solution on a large scale, with a positive effect on the safety of the vehicles and then on the consequent risks of road accidents.

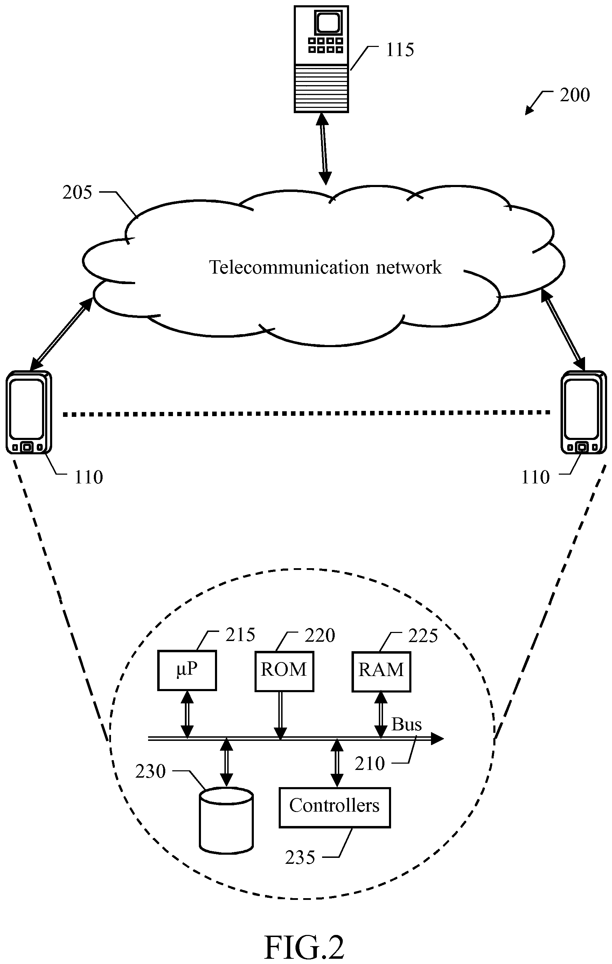

Moving to FIG.2, a block diagram is shown of a system 200 that may be used to implement the solution according to an embodiment of the present invention,

The system 200 comprises the smartphones 110 and the server 115. The smartphones 110 and the server 115 communicate among them via a telecommunications network 205 (for example, based on the Internet).

Each of above-described computing machines (*i.e.,* smartphone 110 and server 115) comprises several units that are connected to each other (for example, through a communication bus with one or more levels, and only for the server 115, also through a cabling sub-system of a data processing center wherein the server 115 is implemented). Particularly, one or more microprocessors (µP) 210 control operation of the computing machine 110,115; a non-volatile memory (ROM) 215 contains basic code for a bootstrap of the computing machine 110,115 and a volatile memory (RAM) 220 is used as a working memory by the microprocessors 210. The computing machine 110,115 is provided with a mass memory 225 for storing programs and data (for example, E²PROM flash memories for the smartphones 110 and strings of disks of the data processing center for the server 115). In addition, the computing machine 110,115 comprises various controllers for peripheral (or Input/Output, I/O) units 230; for example, the peripheral units 230 of the smartphone 110 comprise a transceiver for connecting to a mobile telephone network, a network adapter of Wi-Fi type for connecting to access points to Internet, a touch screen for displaying information and entering commands, a microphone for recording sounds, a speaker for emitting sounds, a GPS receiver for detecting the position and an accelerometer for measuring the (proper) acceleration of the smartphone 110, whereas the peripheral units 230 of the server 115 comprise a network card for plugging into the data processing center and then into the telecommunication network 2095 and a drive module for reading/writing removable storage units, like DVDs, implemented by a console of the data processing center.

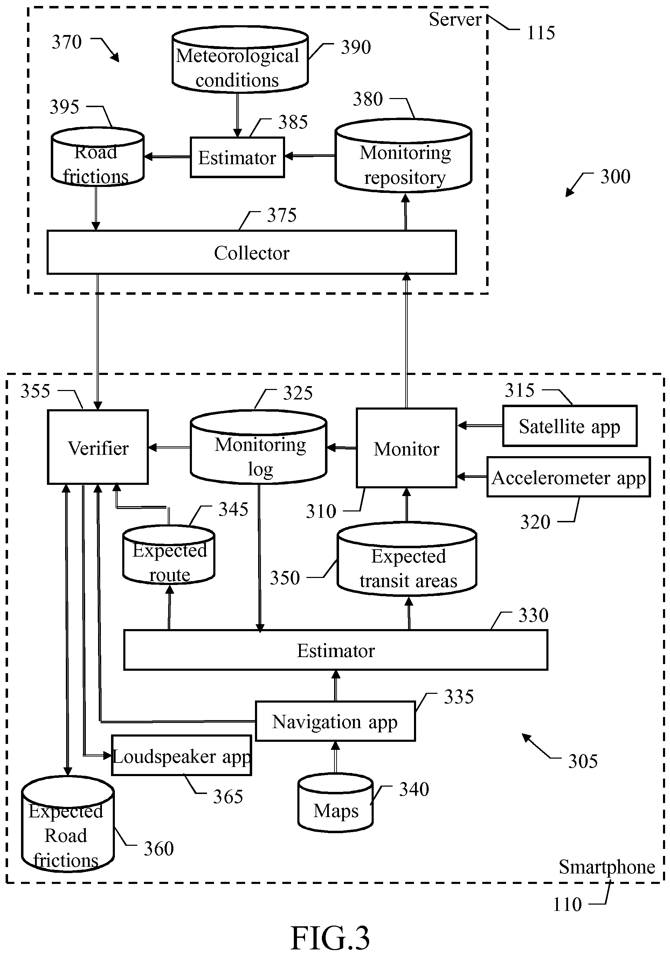

Moving to FIG.3, the main software components 300 are shown that may be used to implement the solution according to an embodiment of the present invention.

The software components 300 are typically stored in the mass memory and loaded (at least partially) into the working memory of each smartphone 110 and of the server 115 when the programs are running, together with an operating system and other application programs (not shown in the figure). The programs are initially installed into the mass memory, for example, from removable storage units or from the telecommunication network. In this respect, each program may be a module, segment or portion of code, which comprises one or more executable instructions for implementing the specified logical function.

Particularly, each smartphone 110 (only one shown in the figure) comprises a driving assistance mobile application (app) 305 with the following components. A monitor 310 is used to monitor the current position and the current acceleration of the smartphone 110. The monitor 310 exploits an app 315 that controls the satellite receiver to measure the current position (for example, defined by GPS coordinates) and an app 320 that controls the accelerometer to measure the current acceleration (for example, defined by the modulus (norm) of the proper acceleration in the horizontal plane). The monitor 310 accesses (in write mode) a monitoring log 325, which stores the current positions, the engaged frictions obtained from the current accelerations and the current speeds that are monitored over time, and the possible danger conditions that have been determined over time. The monitor 310 interacts with the server 115 to transmit the current positions and the engaged frictions. An estimator 330 is used to estimate the expected route. The estimator accesses (in read mode) the monitoring log 325. In addition, the estimator 330 exploits a navigation app 335, which is generally used to provide road directions. The navigation app 335 accesses (in read mode) a map repository 340, which stores one or more maps of corresponding geographical areas (for example, nations). The estimator 330 accesses (in read/write mode) an expected route file 345, which stores the expected route. Moreover, the estimator 330 accesses (in write mode) an expected transit area file 350, which it is also accessed (in read mode) by the monitor 310; the expected transit area file stores a transit area corresponding to the current version of the expected route (for example, 10-100 m x 10-100 m). A verifier 355 is used to verify the danger condition. The verifier 355 accesses (in read/write mode) the monitoring log 325 and the expected route file 345. The verifier 355 interacts with the server 115 to receive the expected road frictions (corresponding to the expected route). The verifier 355 accesses (in read/write mode) an expected road friction file 360, which stores these expected road frictions. The verifier 355 exploits the control app of the satellite navigator 335 and an app 365 that controls the loudspeaker, in particular to emit the danger signal.

Passing to the server 115, it comprises an application 370 that implements a driving assistance service with the following components. A collector 375 is used to collect the current positions, the engaged frictions and the transit areas that are received from all the smartphones. The collector 375 interacts with the monitor 310 of each smartphone to receive this information. The collector 375 accesses (in write mode) a monitoring repository 380, which stores the current positions and the most recent engaged frictions (for example, received in the last 1-3 hours). An estimator 385 is used to estimate the road friction of the road areas (for example, in a grid of 10-100 m x 10-100m). The estimator 385 accesses (in read mode) the monitoring repository 380. In addition, the estimator accesses (in read mode) a weather condition repository 390, which stores an indication of corresponding weather conditions of the various road areas, which is populated by one or more meteorological services, for example, available online in the Internet (not shown in the figure); for example, for each road area the weather condition repository 390 comprises one or more meteorological parameters (for example, clear, mist, fog, cloudy, rain, hail, snow, ice) with corresponding detection instants. The estimator 385 accesses (in read/write mode) a friction repository 395, which stores the road friction of each road area. The collector 375 accesses (in read mode) the road friction repository 395. Moreover, the collector 375 interacts with the verifier 355 of each smartphone 110 for transmitting the corresponding expected road frictions.

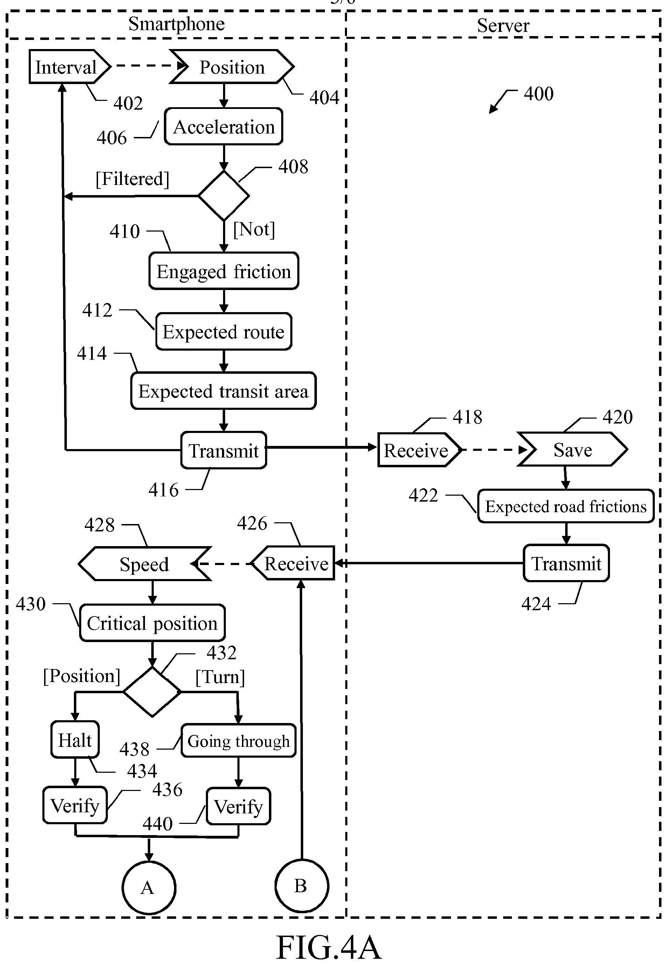

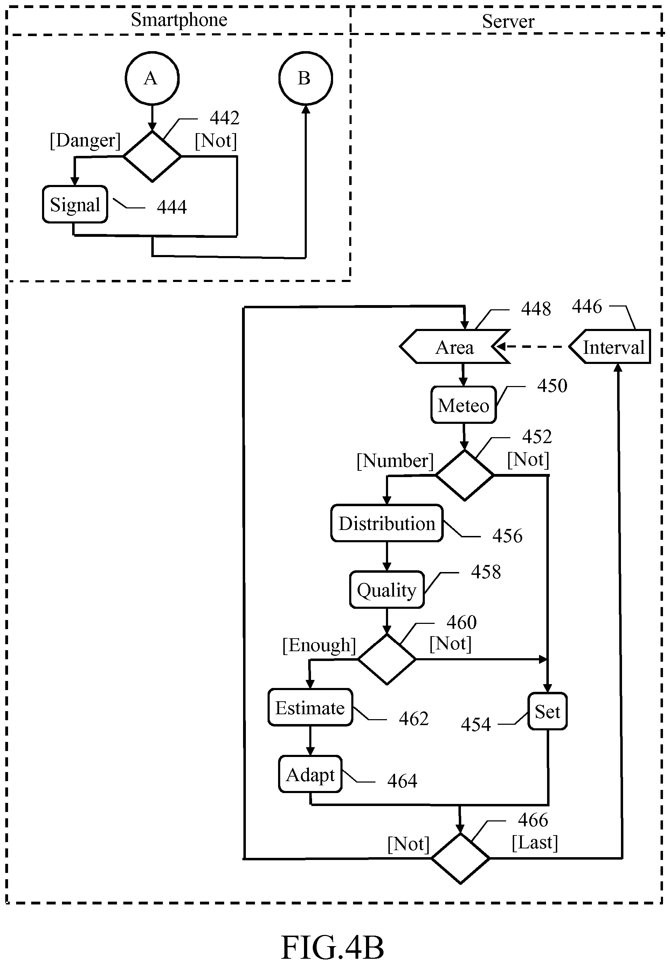

With reference now to FIG.4A-FIG.4B, an activity diagram is shown describing the flow of activities relating to an implementation of the solution according to an embodiment of the present invention.

Particularly, the diagram represents an exemplary process that may be used to facilitate the driving of vehicles with a method 400. In this respect, each block may correspond to one or more executable instructions for implementing the specified logical function on the corresponding computing machines.

Starting from the swim-lane of a generic smartphone (of a person on board a generic vehicle, for example, a driver of a car), a loop is executed continuously. Particularly, the flow of activity passes from block 402 to block 404 at the expiration of a predetermined time interval (for example, every 1-5 s). In response thereto, the monitor measures the current position of the smartphone (via the app controlling the satellite receiver). Continuing to block 406, the monitor measures the (proper) accelerations along three axes perpendicular to each other of the accelerometer (via the corresponding app). The monitor then applies a low-pass filter to the measured accelerations, so as to remove values that do not correspond to a stationary condition of the smartphone in the vehicle (in a way known *per se).* The flow of activity then branches at block 408 according to the result of this operation. If the measured accelerations have been filtered since being not significant to estimate the acceleration of the vehicle, the process returns to the block 402 directly to repeat the same operations periodically. On the contrary, the monitor at block 410 determines the engaged friction corresponding to the current acceleration of the smartphone. For example, the monitor determines the components of the accelerations in the horizontal plane and then the modulus of their vector sum; the monitor then determines the engaged friction µₑ, defined by the ratio between the modulus of a horizontal contact force *Fₕ*=*m·a* and the modulus of a vertical contact force *Fᵥ*=*g·m* (wherein *m* is the unknown mass of the vehicle, a is the current acceleration and g is the modulus of the gravitational acceleration), *i.e., µₑ*=*Fₕ*/*Fᵥ*=*m·a*/*m·g*=*a*/*g.* At this point, the monitor adds a new record to the monitoring log wherein the current position and the engaged friction are saved.

With reference now to block 412, the estimator estimates the expected route of the vehicle (via the navigation app) and saves it into the corresponding file (by replacing its previous version). Particularly, if the navigation app is providing directions to a pre-selected destination, the expected route is defined by a portion with a predetermined length (for example, 100-500 m) of a planned route to go from the current position to the pre-selected destination; on the contrary (in the absence of any planned route), the expected route is defined by a route with the same predetermined length moving from the current position in a current direction of travel (determined according to the previously measured current positions) along the main roads of the map. Therefore, if the navigation app is providing road directions, the expected route indicates the road section wherein it is likely that the vehicle will transit shortly. This might instead be not true in case the driver does not follow the road directions provided by the navigation app or when the navigation app is not providing road directions and the driver deviates from the main road; however, the cycle that is performed continuously by the smartphone allows correcting any discrepancies between the expected route and the one that is actually followed by the vehicle in a short time so that it is not a problem in practice. Continuing to block 414, the estimator calculates the transit area corresponding to the expected route and saves it into the corresponding file (by replacing its previous version). For example, the estimator identifies the maximum distance (as the crow flies) from the current position along the expected path (according to the map in the corresponding repository); the estimator then determines the expected transit area as a square centered on the current position and with a side equal to twice the maximum distance therefrom. At this point, the monitor at block 416 transmits the current position and the engaged friction (extracted from the monitoring log) and the expected transit area (extracted from the corresponding file) to the server. The flow of activity then returns to block 402 for repeating the same operations periodically.

Passing to the swim-lane of the server, the collector is in a waiting condition at block 418. The process passes from the block 418 to block 420 as soon as the collector receives (new values of) current position, engaged friction and expected transit area from any smartphone; in response thereto, the collector adds a new record to the monitoring repository (in FIFO mode), wherein the received position and the engaged friction are saved. Continuing to block 422, the collector determines the expected road areas corresponding to the received expected transit area; for example, the expected road areas are the road areas that are included, at least in part, in the expected transit area. The collector then retrieves the corresponding expected road frictions by extracting the read frictions of the expected road areas from the corresponding repository. At this point, the collector at block 424 returns the expected road frictions so determined to the smartphone; the flow of activity then returns to the block 418 waiting for further (new values of) current position, engaged friction and expected transit area from the smartphones.

Returning to the swim-lane of the smartphone, the verifier is in a waiting condition at block 426. The process passes from the block 426 to block 428 as soon as the verifier receives (new values of) expected road frictions, corresponding to the expected route; in response thereto, the verifier determines the current speed of the smartphone (via the navigation app) and saves it into the last record of the monitoring log. Continuing to block 430, the verifier determines a (first) expected critical position (via the navigation app). The expected critical position is defined by the first position that might create a danger condition along the expected route; particularly, the expected critical position is defined by the first position being potentially of stop (for example, crossing or roundabout with precedence obligation) or by the first turn being potentially dangerous (for example, with an average radius of curvature lower than a threshold value like 5-10 m) moving from the current position along the expected route. The flow of activity then branches at block 432 according to the type of expected critical position.

If the expected critical position is a potentially stop position, the verifier at block 434 calculates (in a way known *per se)* a limit value of the speed (speed limit) to stop the vehicle before the potentially stop position. For this purpose, the verifier determines the distance from the current position to the potentially stop position along the expected route (via the navigation app) and then calculates the speed limit as the maximum speed that allows stopping the vehicle in this distance on the basis of the lowest one of the expected road frictions. Continuing to block 436, the verifier compares the current speed with the limit speed; the verifier determines that an expected danger condition exists when the current speed is higher than a predefined percentage (for example, 80-90%) of the limit speed, so that the vehicle might be not able to halt safely before the potentially stop position.

Returning to the block 432, if the expected critical position is a potentially dangerous turn, the verifier at block 438 calculates (in a way known *per se)* a (further) limit speed to go through the potentially dangerous turn, according to its radius of curvature and the lowest one of the expected road frictions. Continuing to block 440, the verifier compares the current speed with the limit speed; the verifier determines that an expected danger condition exists when the current speed is higher than a predefined percentage (for example, 80-90%) of the limit speed, so that the vehicle might be not able to go through the potentially dangerous turn safely.

The process descends to block 442 from the block 436 or from the block 440. At this point, the flow of activity branches according to the result of the verification of the expected danger condition. Particularly, if the expected danger condition has been determined (because the current speed might be too high to halt within the potentially stop position or to go through the potentially dangerous turn that are likely to be encountered along the expected route) the process passes to block 444. At this point, the verifier emits a corresponding danger signal (via the control app of the speaker); for example, the danger signal comprises an audio alert (strong enough to be perceived by the driver even in noise condition, for example, with a car radio being turned on), followed by a voice announcement indicating the expected danger condition (for example, type of expected critical position and the limit speed). At the same time, the verifier saves an indication of the expected danger condition (for example, again the type of expected critical position and the limit speed) into the last record of the monitoring log. In this way, the information available in the monitoring log provides an accurate picture of the behavior of the vehicle, particularly in case of expected danger conditions; for example, this information may be used to calculate a driving caution indicator according to the behavior (reduction or not of the speed) in response to every signaling of a danger condition (for example, for use in discount campaigns by insurance companies). The process then returns to the block 402 to repeat the same operations periodically (so that the danger signal is repeated until the corresponding expected danger condition persists). The same point is instead reached directly from the block 442 if no expected danger condition has been determined.

With reference now to the swim-lane of the server, a cycle is performed continuously in a completely independent way to update the road frictions. Particularly, the flow of activity passes from block 446 to block 448 at the expiration of a predetermined time interval (for example, every 1-5 s); in response thereto, another cycle is started to process the road areas. The cycle begins with the estimator that takes a (current) road area into account (in any order). Continuing to block 450, the estimator retrieves the meteorological parameters of the road area with the respective detection instants from the weather condition repository (which is kept up-to-date by the estimator asynchronously, for example, by querying the various meteorological services every 10-20 minutes); the estimator then determines the meteorological condition of the road area as an average of the meteorological parameters weighted according to the time elapsed from their detection instants (so as to reduce their contribution as their age increases).

The process branches at block 452 according to the number of engaged frictions that are available for the road area in the monitoring repository. If the number of engaged frictions is (possibly strictly) lower than a minimum value to ensure an acceptable level of accuracy (for example, 5-10), the flow of activity passes to block 454. In this case, the road friction of the road area is set to a default value corresponding to the weather conditions of the road area; for example, the road friction is set to 0.7 if the road should be dry (for example, if it has not rained/snowed for at least 6 hours and the temperature is higher than 4° C), 0.5 if the road should be wet (for example, if it has rained in the last 6 hours and the temperature is higher than 4 °C), 0.2 if the road should be snowy (for example, if it has snowed in the last 6 hours and the temperature is higher than 4 °C) and 0.1 if the road should be icy (for example, if the temperature is equal to or less than 4 °C), with the road friction that is then reduced by a predetermined percentage in case of fog (for example, 20-40%). This allows ensuring that a first estimate of the road friction is always available (in any condition).

Returning to the block 452, if the number of engaged frictions is (possibly strictly) higher than the minimum value of above, the flow of activities instead passes to block 456. In this case, the estimator determines a statistical distribution of the engaged frictions; for example, the estimator determines a histogram of the engaged frictions (at intervals such as of 0.01-0.1) as a function of the natural logarithm of their occurrences and approximates it with a probability function. Continuing to block 458, the estimator calculates a quality index of the engaged frictions, for example, indicative of a dispersion of the statistical distribution (as defined by the standard deviation of the probability function). The flow of activity branches at block 460 according to the quality index. Particularly, if the quality index is (possibly strictly) higher than a maximum value for ensuring an acceptable level of accuracy (for example, 20-30 for the standard deviation), the flow of activity passes to the block 454 again (wherein the road friction is set to the default value corresponding to the weather conditions of the road area); in this way, there is avoided estimating the road friction when the dispersion of road frictions is too high, and then they might be not significant (at the same time still providing a first estimate of the road friction).

Returning to the block 460, if the quality index is (possibly strictly) lower then the maximum value of above, the flow of activities instead passes to block 462. In this case, the estimator estimates the road friction from the probability function. For example, the estimator determines a maximum value of the engaged frictions corresponding to the absolute maximum of the probability curve, which defines a potential friction that is available; the estimator then sets the road friction to a predefined percentage of the potential friction (for example, 70-80%). Continuing to block 464, the estimator adapts the road friction according to the weather conditions; for example, the estimator reduces the road friction by a predefined percentage in rain, snow, ice and/or fog conditions (for example, by 10-30%).

The flow of activity then merges again at block 464, which is reached from either the block 454 or the block 464. At this point, the estimator verifies whether a last road area has been processed. In the negative case, the process returns to the block 450 to repeat the same operations on a next road area. Once all the road areas have been processed, the loop is exit by returning to the block 446 to repeat the same operations periodically.

Naturally, in order to satisfy local and specific requirements, a person skilled in the art may apply many logical and/or physical modifications and alterations to the present invention. More specifically, although this invention has been described with a certain degree of particularity with reference to one or more embodiments thereof, it should be understood that various omissions, substitutions and changes in the form and details as well as other embodiments are possible. Particularly, different embodiments of the present invention may even be practiced without the specific details (such as the numerical values) set forth in the preceding description to provide a more thorough understanding thereof; conversely, well-known features may have been omitted or simplified in order not to obscure the description with unnecessary particulars. Moreover, it is expressly intended that specific elements and/or method steps described in connection with any embodiment of the present invention may be incorporated in any other embodiment as a matter of general design choice. In any case, each numerical value should be read as modified by the term about (unless already done) and each range of numerical values should be intended as expressly specifying any possible number along the *continuum* within the range (comprising its end points). Moreover, ordinal or other qualifiers are merely used as labels to distinguish elements with the same name but do not by themselves connote any priority, precedence or order. The terms include, comprise, have, contain and involve (and any forms thereof) should be intended with an open, non-exhaustive meaning (*i.e.,* not limited to the recited items), the terms based on, dependent on, according to, function of (and any forms thereof) should be intended as a non-exclusive relationship (*i.e.,* with possible further variables involved), the term a/an should be intended as one or more items (unless expressly indicated otherwise), and the term means for (or any means-plus-function formulation) should be intended as any structure adapted or configured for carrying out the relevant function.

For example, an embodiment provides a driving assistance method of a vehicle. However, the vehicle may be of any type (for example, a car, a van, a truck, a bus, a motorcycle).

In an embodiment, the method comprises the following steps in a mobile computing device of a person on board the vehicle. However, the mobile computing device may be of any type (see below) and of any number and type of persons on board the vehicle (for example, a driver, one or more passengers).

In an embodiment, the method comprises monitoring a current position and a current acceleration of the mobile computing device over time. However, the current position may be of any type (for example, GPS coordinates, geographical coordinates, street address) and the current acceleration may be of any type (for example, the horizontal acceleration, longitudinal acceleration, lateral acceleration or both of them, either in modulus or in vector form); moreover, these values may be monitored in any way (for example, via a satellite navigation system, a mobile telephone network, Wi-Fi networks and via an accelerometer, a gyroscope, respectively, in any case either in push or pull mode).

In an embodiment, the method comprises transmitting an indication of the current position and of an estimation parameter depending on the current acceleration to a central processing system. However, the estimation parameter may be of any type and dependent on the current acceleration in any way (for example, engaged friction, the same pre-processed to take into account the driving condition, such as accelerating or braking, longitudinal and/or lateral engaged friction, or simply current acceleration being filtered or as measured); in any case, these values may be transmitted in any way (for example, via the Internet, mobile telephone network, Wi-fi networks, either in push or pull mode) to any central processing system (see below).

In an embodiment, this causes the central processing system to estimate corresponding road frictions in a plurality of road areas according to the current positions and the estimation parameters received from a plurality of instances of the mobile computing device. However, the road friction may be of any type and estimated in any way (see below).

In an embodiment, the method comprises estimating an expected route of the vehicle according to the current positions being monitored over time. However, the expected route may be estimated in any way (for example, via the navigation app, simply by interpolating the current positions).

In an embodiment, the method comprises receiving one or more expected road frictions comprising the road frictions of corresponding expected road areas of said road areas along the expected route. However, the expected road frictions may be received at any time (for example, in response to the transmission of the current position and of the estimation parameter or independently) and in any way (either the same or different with respect to the transmission of the current position and of the estimation parameter); moreover, they may be received within any type of information (for example, with the expected road frictions only or comprising a set of road frictions corresponding to the current position from which they are extracted).

In an embodiment, the method comprises verifying an expected danger condition according to the expected road frictions. However, the expected danger condition may be determined in any way (for example, based on the trend of the expected route, to the current speed or any combination thereof, for any distance from the current position).

In an embodiment, the method comprises emitting a danger signal in response to the expected danger condition. However, the danger signal may be of any type (for example, auditive with a sound and/or a voice, visual and any combination thereof, emitted directly on the mobile computing device or even by transmitting a corresponding signal to a vehicle console, for example, via Bluetooth, for its emission thereon).

In an embodiment, the method comprises processing the current acceleration monitored over time to reduce a contribution due to a movement of the mobile processing device inside the vehicle. However, the current acceleration may be processed in any way (for example, by applying a low-pass filter, smoothing algorithms).

In an embodiment, said step of estimating an expected route comprises estimating the expected route further according to a road map stored in the mobile computing device. However, the road map may be of any type (for example, associated with a navigation app or stand-alone).

In an embodiment, said step of verifying an expected danger condition comprises verifying the expected danger condition further according to a trend of the expected route in the road map. However, this result may be obtained in any way (for example, considering potentially stop positions, potentially dangerous turns, bottlenecks, bumps or any combination thereof).

In an embodiment, said step of verifying an expected danger condition comprises calculating a current speed of the mobile computing device according to the current positions being monitored over time. However, the current speed may be calculated in any way (for example, via the navigation app, simply based on the current positions and their detection instants).

In an embodiment, said step of verifying an expected danger condition comprises verifying the expected danger condition further according to the current speed. However, the expected danger condition may be verified by taking into account the current speed in any way (for example, to allow the vehicle to stop, to go through a turn, to cross a bottleneck, to pass a bump, or even simply on the basis of its value).

In an embodiment, said step of verifying an expected danger condition comprises estimating a first position being potentially of stop for the vehicle along the expected route according to the road map. However, the first position may be of any type (for example, a stop, a precedence, a roundabout, a level crossing, a pedestrian crossing).

In an embodiment, said step of verifying the expected danger condition comprises verifying the expected danger condition according to a distance from the current position to the first position along the expected route, the current speed and the expected road frictions from the current position to the first position along the expected route. However, the danger condition may be verified by taking into account this information in any way (for example, by calculating the limit speed, a braking distance and comparing the current speed with any value depending thereon, in any percentage or even the same).

In an embodiment, said step of verifying an expected danger condition comprises estimating a first turn being potentially dangerous for the vehicle along the expected route according to the road map. However, the first turn may be of any type (for example, any turn, a hard turn, a hairpin).

In an embodiment, said step of verifying an expected danger condition comprises determining a radius of curvature of the first turn according to the road map. However, the radius of curvature may be determined in any way (for example, average, minimum value).

In an embodiment, said step of verifying the expected danger condition comprises verifying the expected danger condition according to the radius of curvature, the current speed and the expected road frictions from the current position to the first turn along the expected route. However, the danger condition may be verified by taking into account this information in any way (for example, by calculating the limit speed, a deceleration distance and comparing the current speed with any value dependent thereon, in any percentage or even the same).

In an embodiment, the method comprises logging an indication of each expected danger condition and of a reaction parameter depending on the current position and/or the current acceleration being monitored over time after the danger condition. However, the danger condition may be indicated in any way (for example, type, speed limit, braking distance, deceleration distance) and the reaction parameter may be of any type (for example, the current acceleration, the current speed); in any case, this information may be used for any purpose (for example, insurance companies, police authorities in cases of accidents).

An embodiment provides a driving assistance method of a plurality of vehicles. However, the vehicle may be of any type (see above).

In an embodiment, the method comprises the following steps in a central processing system. However, the central processing system may be of any type (see below).

In an embodiment, the method comprises receiving current positions and estimation parameters depending on current accelerations being monitored over time by each of a plurality of mobile computing devices of corresponding persons on board the vehicles. However, this information may be of any type and received in any way (see above) by any number of mobile computing devices of any type (see above).

In an embodiment, the method comprises estimating corresponding road frictions in a plurality of road areas according to the current positions and the estimation parameters. However, the road areas may be in any number and of any shape and size (for example, square, rectangular, circular, with fixed or variable size either statically or dynamically as a function of the occurrences of the collected measurements); in addition, the road frictions may be of any type (for example, total in horizontal, longitudinal and/or lateral) and they may be estimated in any way (for example, approximating the estimation parameters with an instance of a predefined parametric model, setting them to any percentage of the potential friction or even equal thereto, with or without taking into account the meteorological conditions and/or the times elapsed from the receipt of the collected information).

In an embodiment, the method comprises transmitting to each of the mobile computing devices one or more expected road frictions. However, the expected road frictions may be transmitted in any way (see above).

In an embodiment, the road frictions comprise the road frictions of corresponding expected road areas of said road areas along an expected route of the mobile computing device estimated according to the current positions of the mobile computing device being monitored over time. However, the expected route may be estimated in any way (see above).

In an embodiment, this causes the mobile computing device to verify an expected danger condition according to the expected road frictions and to emit a danger signal in response to the expected danger condition. However, these operations may be performed in any way (see above).

In an embodiment, said step of estimating corresponding road frictions comprises receiving an indication of corresponding weather conditions of the road areas. However, the weather conditions may be of any type (for example, qualitative and/or quantitative such as a measure of visibility, rain intensity, snow depth, temperature) and they may be received in any way (for example, by any number of meteorological services of any type, public or free of charge, either in push or pull mode).

In an embodiment, said step of estimating comprises estimating corresponding road frictions comprises estimating the road frictions of the road areas further according to the corresponding weather conditions. However, the road friction may be estimated according to the weather conditions in any way (for example, by setting them according thereto when the collected information is scarce and/or of low quality, by correcting the estimated values in any way such as proportionally to the visibility and in any combination thereof).

Generally, similar considerations apply if the same solution is implemented with an equivalent method (by using similar steps with the same functions of more steps or portions thereof, removing some non-essential steps or adding further optional steps); moreover, the steps may be performed in a different order, concurrently or in an interleaved way (at least in part).

An embodiment provides a software program configured for causing a mobile computing device or a central computing system to perform the corresponding method mentioned above when the software program is executed thereon. An embodiment provides a software program product comprising a computer readable storage medium embodying a software program, the software program being loadable into a working memory of a mobile computing device or of a central computing system thereby configuring it to perform the same method. However, each software program may be implemented as a stand-alone module, as a plug-in for a pre-existing program (for example, a navigation app or a site of an insurance company), or even directly in the latter.

In any case, similar considerations apply if the program is structured in a different way, or if additional modules or functions are provided; likewise, the memory structures may be of other types or they may be replaced with equivalent entities (not necessarily consisting of physical storage media). The program may take any form suitable to be used by any computing machine (mobile computing device or central computing system, see below), thereby configuring the computing machine to perform the desired operations; particularly, the program may be in the form of external or resident software, firmware, or microcode (either in object code or in source code - for example, to be compiled or interpreted). Moreover, it is possible to provide the program on any computer readable storage medium; the storage medium is any tangible medium (different from transitory signals *per se)* that may retain and store instructions for use by the computing machine. For example, the storage medium may be of the electronic, magnetic, optical, electromagnetic, infrared, or semiconductor type; examples of such storage medium are fixed disks or SSDs (where the program may be pre-loaded), removable disks, memory keys (for example, USB), and the like. The program may be downloaded to the computing machine from the storage medium or via a network (for example, the Internet, a wide area network and/or a local area network comprising transmission cables, optical fibers, wireless connections, network devices); one or more network adapters in the computing machine receive the program from the network and forwards it for storage in one or more storage devices thereof. In any case, the solution according to an embodiment of the present invention lends itself to be implemented even with a different architecture (for example, with various operations that may be moved between the mobile computing device and the central computing system, such as by performing the determination of the estimation parameters, the estimation of the expected route and the verification of the danger condition on the central computing system and/or by performing the determination of the expected road areas on the mobile computing devices), with a hardware structure (for example, by electronic circuits integrated in one or more chips of semiconductor material), or with a combination of software and hardware suitably programmed or otherwise configured.

An embodiment provides a mobile computing device comprising means configured to perform the steps of the corresponding method of above. However, the mobile computing device may be of any type (for example, a smartphone, a tablet). An embodiment provides a central processing system comprising means configured to perform the steps of the corresponding method of above. However, the central processing system may be of any type (for example, one or more servers either standard or in cloud computing environment). However, each computing machine (mobile computing device and central processing system) may have another structure or may comprise similar elements (such as cache memories temporarily storing the programs or parts thereof); moreover, it is possible to replace the computing machine with any code execution entity, based on either a physical machine or a virtual machine.

Generally, similar considerations apply if the mobile computing device and the central processing system each has other operative characteristics. In any case, every component thereof may be separated into more elements, or two or more components may be combined together into a single element; moreover, each component may be replicated to support the execution of the corresponding operations in parallel. Moreover, unless specified otherwise, any interaction between different components generally does not need to be continuous, and it may be either direct or indirect through one or more intermediaries.

## Claims

1. A driving assistance method (400) of a vehicle, wherein the method (400) comprises in a mobile computing device (110) of a person on board the vehicle:
monitoring (402-410) a current position and a current acceleration of the mobile computing device over time,
transmitting (416) an indication of the current position and of an estimation parameter depending on the current acceleration to a central processing system for causing the central processing system to estimate corresponding road frictions in a plurality of road areas according to the current positions and the estimation parameters received from a plurality of instances of the mobile computing device,
estimating (412-414) an expected route of the vehicle according to the current positions being monitored over time,
receiving (426) one or more expected road frictions comprising the road frictions of corresponding expected road areas of said road areas along the expected route,
verifying (428-440) an expected danger condition according to the expected road frictions, and
emitting (442-444) a danger signal in response to the expected danger condition.

2. The method (400) according to claim 1, wherein the method (400) comprises:
processing (406) the current acceleration monitored over time to reduce a contribution due to a movement of the mobile processing device (110) inside the vehicle.

3. The method (400) according to claim 1 or 2, wherein said estimating (412-414) an expected route comprises:
estimating (412) the expected route further according to a road map stored in the mobile computing device.

4. The method (400) according to claim 3, wherein said verifying (428-440) an expected danger condition comprises:
verifying (428-440) the expected danger condition further according to a trend of the expected route in the road map.

5. The method (400) according to claim 4, wherein said verifying (428-440) an expected danger condition comprises:
calculating (428) a current speed of the mobile computing device according to the current positions being monitored over time, and
verifying (430-440) the expected danger condition further according to the current speed.

6. The method (400) according to claim 5, wherein said verifying (428-440) an expected danger condition comprises:
estimating (430) a first position being potentially of stop for the vehicle along the expected route according to the road map, and
verifying (434-436) the expected danger condition according to a distance from the current position to the first position along the expected route, the current speed and the expected road frictions from the current position to the first position along the expected route.

7. The method (400) according to claim 5 or 6, wherein said verifying (428-440) an expected danger condition comprises:
estimating (430) a first turn being potentially dangerous for the vehicle along the expected route according to the road map,
determining (438) a radius of curvature of the first turn according to the road map, and
verifying (440) the expected danger condition according to the radius of curvature, the current speed and the expected road frictions from the current position to the first turn along the expected route.

8. The method (400) according to any claim from 1 to 7, wherein the method (400) comprises:
logging (410) an indication of each expected danger condition and of a reaction parameter depending on the current position and/or the current acceleration being monitored over time after the danger condition.

9. A driving assistance method (400) of a plurality of vehicles, wherein the method (400) comprises in a central processing system (115):
receiving (418-420) current positions and estimation parameters depending on current accelerations being monitored over time by each of a plurality of mobile computing devices of corresponding persons on board the vehicles,
estimating (446-464) corresponding road frictions in a plurality of road areas according to the current positions and the estimation parameters,
transmitting (432-434) to each of the mobile computing devices one or more expected road frictions comprising the road frictions of corresponding expected road areas of said road areas along an expected route of the mobile computing device estimated according to the current positions of the mobile computing device being monitored over time to cause the mobile computing device to verify an expected danger condition according to the expected road frictions and to emit a danger signal in response to the expected danger condition.

10. The method (400) according to claim 9, wherein said estimating (446-464) corresponding road frictions comprises:
receiving (450) an indication of corresponding weather conditions of the road areas, and
estimating (454;464) the road frictions of the road areas further according to the corresponding weather conditions.

11. A software program (305) configured for causing a mobile computing device (110) to perform the method (400) according to any claim from 1 to 8 when the software program is executed on the mobile computing device (110).

12. A software program (370) configured for causing a central processing system (115) to perform the method (400) according to claim 9 or 10 when the software program is executed on the central processing system (115).

13. A mobile computing device (110) of driving assistance of a vehicle, wherein the mobile computing device (110) comprises:
means (310-320) for monitoring (402-410) a current position and a current acceleration of the mobile computing device over time,
means (310) for transmitting (416) an indication of the current position and of an estimation parameter depending on the current acceleration to a central processing system for causing the central processing system to estimate corresponding road frictions in a plurality of road areas according to the current positions and the estimation parameters received from a plurality of instances of the mobile computing device,
means (330-335) for estimating (412-414) an expected route of the vehicle according to the current positions being monitored over time,
means (355) for receiving (426) one or more expected road frictions comprising the road frictions of corresponding expected road areas of said road areas along the expected route,
means (335,355) for verifying (428-440) an expected danger condition according to the expected road frictions, and
means (355,365) for emitting (442-444) a danger signal in response to the expected danger condition.

14. A central processing system (115) of driving assistance of a plurality of vehicles, wherein the central processing system (115) comprises:
means (375) for receiving (418-420) current positions and estimation parameters depending on current accelerations being monitored over time by each of a plurality of mobile computing devices of corresponding persons on board the vehicles,
means (385) for estimating (446-464) corresponding road frictions in a plurality of road areas according to the current positions and the estimation parameters,
means (275) for transmitting (432-434), to each of the mobile computing devices, one or more expected road frictions comprising the road frictions of corresponding expected road areas of said road areas along an expected route of the mobile computing device estimated according to the current positions of the mobile computing device being monitored over time to cause the mobile computing device to verify an expected danger condition according to the expected road frictions and to emit a danger signal in response to the expected danger condition.
